Europäisches Patentamt

European Patent Office

Office européen des brevets

(11) Publication number: **0 258 166**
A1

# EUROPEAN PATENT APPLICATION

(21) Application number: 87600004.3

(51) Int. Cl.⁴: **A 47 J 37/07**, F 24 B 1/20

(22) Date of filing: **03.04.87**

(30) Priority: **03.04.86 GR 860887**

(71) Applicant: **Loukas, Alefragis, 445 Dimokratias Av., GR-188 63 Keratsini Piraeus (GR)**

(43) Date of publication of application: **02.03.88**
**Bulletin 88/9**

(84) Designated Contracting States: **AT BE CH DE ES FR GB IT LI LU NL SE**

(72) Inventor: **Loukas, Alefragis, 445 Dimokratias Av., GR-188 63 Keratsini Piraeus (GR)**

(54) **Portable small-size oven.**

(57) An outdoor small-size cooking and barbecue oven (1) comprising a cooking space closed by a hinged door (11, 13) and a fuel pan which can be adjusted at several heights.

ACTORUM AG

- 1 -

INEXPENSIVE SMALL OVEN

(Special for the country - There is no danger for fire)

This invention refers to a small oven of two types, with or without a shallow metal tray, more particularly there is an innovation to the traditional way of cooking in an oven and a new product appears having many advantages that are :

1) We can cook the whole day without spending money buying charcoal or chemical coal or another combustible, gas, alcohol etc. We shall cook twice 1,5 kilo of meat or fish, or chicken and others, or one plate with a meal, with a good fire that will be made by the small oven, from any wood, dry branches of trees or pine-cones that one can so easily find in the country. This is offered to us by the natural operation (air pull) of its portable chimney.

2) The inexpensive small oven can operate there where there is a danger for fire (mainly in the country) because the focus of the fire is within its closed area and does not cause fire.

3) It is not needed to be tired to make the fire or to use expensive chemical coal in order to avoid the blowing. The chimney creates this current of the air.

4) In all types of the traditional ways of cooking, when the fat drops it is burned and it makes useless what we cook. So we were obliged, while cooking to take care so as to avoid this. The inexpensive small oven does not need this care.

5) We do not need to beat the meat in order to have it better cooked, as it is usually done, what we cook is of a good taste and smooth, because it is not beaten by the air, heat is operating in  a circular way and cooks the meal without drying it.

But, also due to the particular way of cooking (a continuous renewing

Μεταφραστικό Γραφείο Υπουργείου Εξωτερικών, Αθήνα.

Bureau des Traductions du Ministère des Affaires Etrangères de la République Hellénique, Athènes.

of the oxygen) removes the disagreable smells and gives at the same time the impression that the congelated was fresh and the hard was smooth.

6) Cooking is quick first because the wood or the dried branches of the trees become quickly a fire, quicker than the charcoal and second because the fire is better performing in the closed area.

7) When we have to cook large quantities, in order to avoid making often a fire from wood or branches, then using the charcoal, we shall need almost the half of what is needed for another oven. Because the "inexpensive oven" conserves and uses better its fire within its closed area.

8) Both types can cook with a plate every meal and their difference is that the second type has an air room and a plate while the first has not but we can cook using any other plate, of metal, or a pyrex placing it on the grate.

9) It can cook under difficult weather conditions (air, rain).

10) It may operate for many many years.

## CHARACTERISTICS

The "inexpensive oven" consiste of seven parts that are separate and are the following :

1. The main body, which is of a parallelogram shape and resembles to a box, closed in the rear part and open in the front part.
In the upper part it has the handle and the base of the chimney and down, it has four legs, all incorporated in it.
To the front upper part, a door is fixed with hinges and it has two directions and to the lower part, we incorporated a perforated separation for the insertion of the air.
In the inner part, to the left and to the right, we have incorporated the bases of the grate.

They start from the upper part of the face of the perforated separation and they cover the whole of the legnth of the oven.
When we place the grate on the bases, we see that a place is created under this. It is the place of the stove of the oven. Furthermore to the main body of the second type, which is the same with that of the first type, we have added the air room. We incorporated this under the stove.
Both types in their interior have all other parts and these are :
2. The portable chimney.
3. The divided grate that has incoproated bases with holders for the clamps.
4. The clampsof the grate.
5. The folding table.
6. The wire to arrange the fire and the door.
7. The portable plate for the second type.

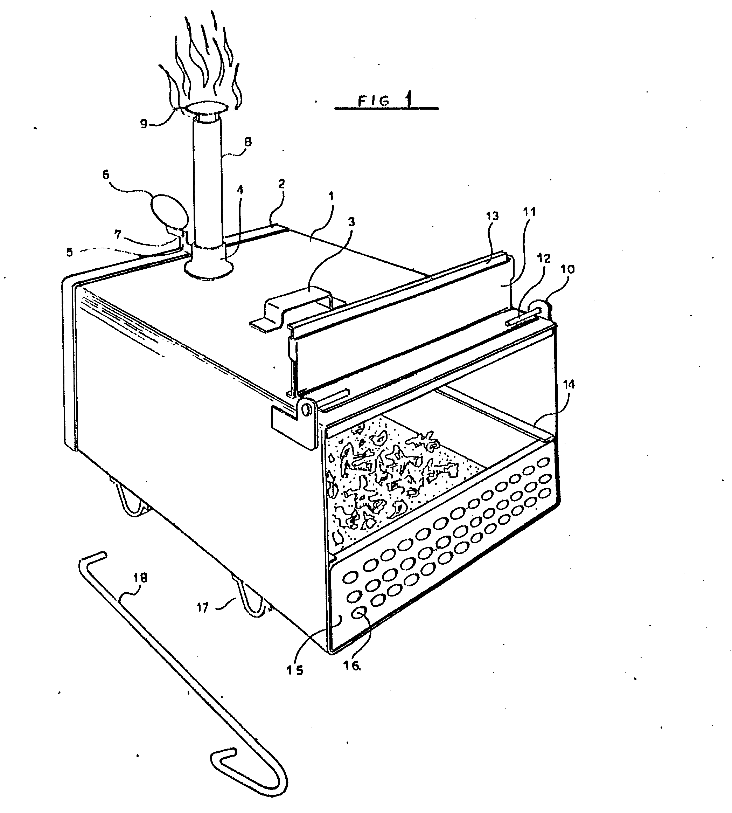

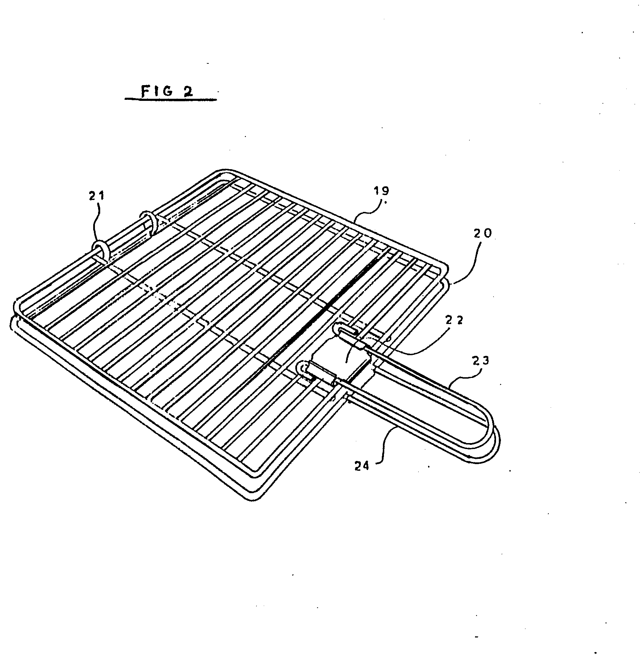

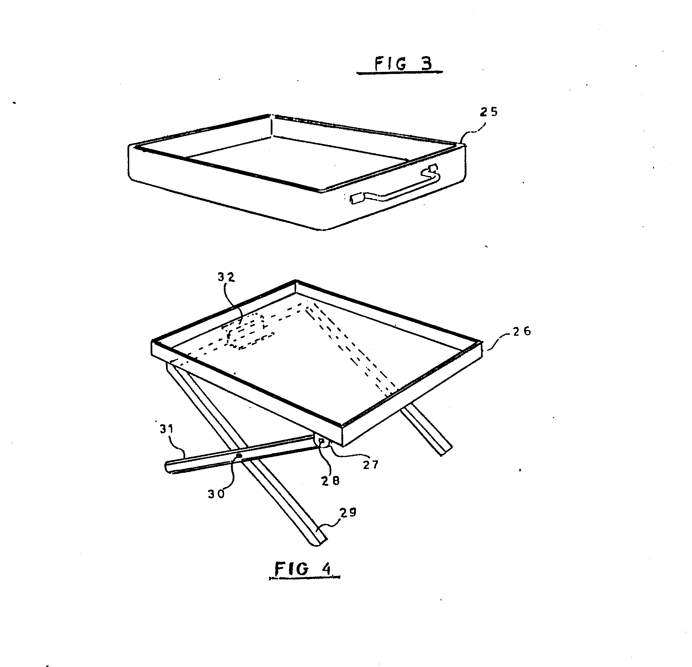

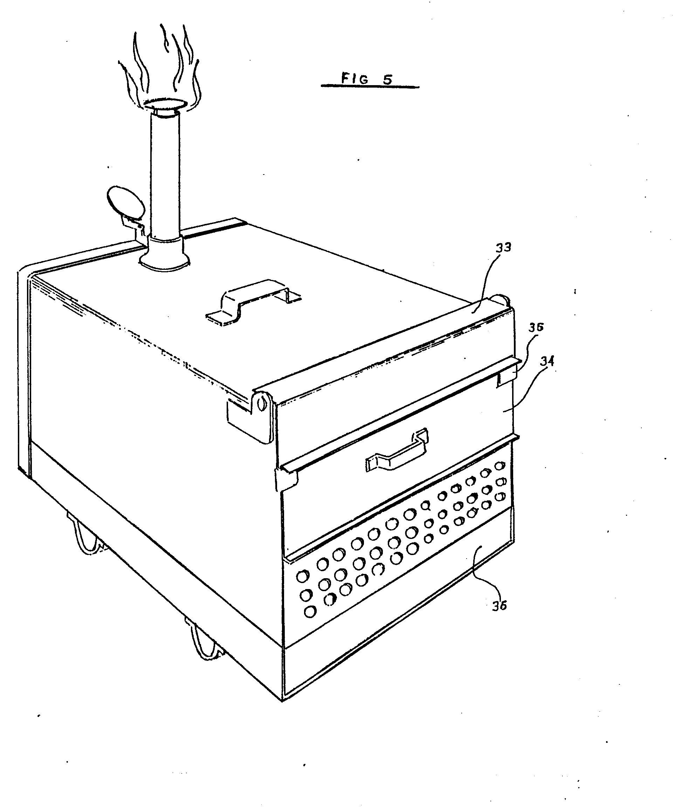

We shall describe now a preferred incorporation and operation of the invention, under the form of an example only, in conjunction with the attached drawing that are :
Drawing 1 is the small oven of the first type, with the door open in both directions and the chimney in the base thereof.
Drawing 2 is a double grate closed with the clamps in the holders thereof. Drawing 3 is a plate.
Drawing 4 is a folding table.
Drawing 5 is the small oven of the second type with the door closed in both directions.

The accessories Number 1 is the main body of the oven. The number 2 is a *lid* incoroporated that closes the whole rear part of the oven. The 3 is a holder. The 4 is the base of the chimney and 6 is the *lid* thereof. The 8 is the chimney and the 9 is the *lid* thereof. The 10 and 12 are hinge of a door. The 11 and 13 are the upper and down respectively sheets of the door, open in both directions. 14 is the base of the grate. 15 is the perforated separation and 16 shows the perforations thereof.

17 is one of the four legs. 18 is the wire bar. 19 and 20 are two grates and 21 is one of the two rings that unites them. 22 is one of the two bases of clamps, with the sockets. 23 and 24 are portable clamps. 25 is the plate. 26 is the frame of the folding table. 33 and 34 are the two sheets of the door closed in both directions.

35 is an insertion where glides the lower sheet of the door and finally the 36 is the hotroom for the second type.

We take the small oven drawing 1, we open it placing it on the table 26 and the chimney 8 to the base thereof 4.

We open the door 13 and 11, we place wood, branches or coal to the stove, as per drawing 1, we put fire and we wait.

In the grate of the drawing 2 , we place the clamps 23 and 24 to the receivers that are in the bases 22, we open it, we place on it what we want to cook, we fold it and we place it on the stove, on the bases 14, when the wood is made fire.

It has been seen that, when what we cook is fatty, the fat thereof drops on the fire and it is not burned when the air that enters to the oven crosses the perforations 16.

This is done when we take out the clamps and the door is closed in both directions 33 and 34.

Let us say that what we placed on the grate, is fatty. Then we remove the clamps pressing these to glide to the interior of the oven and to close together, so that they are free from the receivers of the bases 22.

Μεταφραστικό Γραφείο Υπουργείου Εξωτερικών, Αθήνα.
Bureau des Traductions du Ministère des Affaires Etrangères
de la République Hellénique, Athènes.

Finally, the door is hot and we close it with the wire bar 18.
The small oven is now in full operation cooking as follows :
The air hot from the fire that has a direction upwards and the
pulling of it from the chimney, create a natural operation of
circulation of the air. The chimney takes the air from the interior
of the oven, the oven makes a vaccuum and wants the air it looses.
So, a current of air is entering from the perforations 16, it
crosses and blows continuously the fire under the grate going
out from the chimney. In the point of the exit, exactly under
the base of the chimney 4, we do not place meal to the grate.
We leave an empty space 2-3 x 3 cm. so that the circulation of
the air may be made.

When our oven cooks to the upper part of the grate, under the
stove in the hot chamber 36 of the second type, the plate is
heating some meal. When we want to make a quick meal in the
plate, then we take out the grate of drawing 2 and on the bases
thereof 14 we place the plate 25.

As we can see in the attached drawings and description, to the
main body we have give a parallelogram shape and to the chimney
a cylindrical one, but we can give any other shape we wish. As
well as this is clear, various modifications and changes may be
done without going far from the idea of the invention.

Μεταφραστικό Γραφείο Υπουργείου Εξωτερικών, Αθήνα.
Bureau des Traductions du Ministère des Affaires Etrangères
de la République Hellénique, Athènes.

## C L A I M S

1. Inexpensive small oven in two types, with or without a plate, that may be made in any shape from inox, decape, black or any other quality of iron plate, characterized by the fact that it can operate with any kind of wood, dry branches that one can so easily find in the country, so making it inexpensive and due to its closed stove there is no danger for fire.

2. Inexpensive oven according to No. 1 above, characterized for its portable chimney, of a cylindrical shape, able to take another shape too, parallelogram or other.

3. Inexpensive small oven according to the claims   Nos 1 and 2 characterized by the door in two directions, so that when we close it to cook it is adjusted by the weight thereof, alone, automatically, and stops to the level of the upper clamp of the grate. where this too will have a proportionate height, according to that we are cooking.

4. Inexpensive small oven, according to the claims 1 and 2 characterized by the grate with portable clamps that help first : when we cook and we take them out, the door closes in two directions up to there where the perforated separation starts, seeing so that various factors make the fat that drops not to be burnt.

And second : we take them and we keep them in the oven so that a small volume is needed.

5. Inexpensive small oven according to the claims   1 to 4, characterized for the folding table able, first to keep the fire of the oven high and second, when the small oven does not operate, to take this in and have more space.

6. Inexpensive small oven according to any of the above claims characterized for the two volumes it presents as well as the two faces. One of which, when not operating becomes a portable box, small in volume, easily to be carried and the other, when it is developed in order to operate, increases its volume very much.

7. Inexpensive small oven, as this is described herein and also in the attached drawings.

Μεταφραστικό Γραφείο Υπουργείου Εξωτερικών, Αθήνα.
Bureau des Traductions du Ministère des Affaires Etrangères de la République Hellénique, Athènes.

0258166

7/4

FIG 1

0258166

2/4

FIG 2

FIG 3

25

32

26

31

27

28

30

29

FIG 4

0258166

FIG 5

33
35
34
36
36

## European Patent Office

## EUROPEAN SEARCH REPORT

EP 87 60 0004

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 880 139 (YOUNG) <br> * Whole document * | 1,2,6 | A 47 J 37/07 <br> F 24 B 1/20 |
| X | US-A-3 809 051 (GIROUX) <br> * Whole document * | 1,5,6 | |
| X | US-A-1 404 808 (TAYLOR) <br> * Whole document * | 1-3 | |
| X | US-A-2 119 799 (SIVEY) <br><br> * Whole document * | 1,2,5, 6 | |
| X | US-A-2 902 026 (HATHORN) <br> * Whole document * | 1-3 | |
| X | US-A-2 708 925 (CORDREY) <br> * Whole document * | 1,5 | TECHNICAL FIELDS SEARCHED (Int. Cl.4) <br><br> A 47 J <br> F 24 B <br> F 24 C |
| A | US-A-3 323 443 (SCHULZE) <br> * Whole document * | 1,4 | |
| X | US-A-4 508 096 (SLATTERY) <br> * Whole document * | 1,6 | |

The present search report has been drawn up for all claims

| Place of search | Date of completion of the search | Examiner |
|---|---|---|
| THE HAGUE | 09-11-1987 | SCHARTZ J. |